# FASCICULE DE BREVET EUROPEEN

(11) **EP 0 982 176 B1**
(45) Date de publication et mention de la délivrance du brevet: **12.10.2011**
(21) Numéro de dépôt: 99402060.0
(22) Date de dépôt: 13.08.1999
(51) Int. Cl.: B60L 11/18

(54) **Système d'alimentation d'un véhicule à traction électrique**
Stromversorgungssystem für ein elektrisch angetriebenes Fahrzeug
Power supply system for an electric driven vehicle

(30) Priorité: 28.08.1998 FR 9810830
(43) Date de publication de la demande: 01.03.2000
(73) Titulaire: ALSTOM Transport SA, 92300 Levallois-Perret (FR)
(72) Inventeur: Gibard, Philippe, 17000 La Rochelle (FR)
(74) Mandataire: Jacobson, Claude

(56) Documents cités:
- DE-A- 2 405 198
- DE-A- 3 101 655
- FR-A- 2 756 118
- SCHAIBLE U ET AL: "A TORQUE CONTROLLED HIGH SPEED FLYWHEEL ENERGY STOGARE SYSTEM FOR PEAK POWER TRANSFER IN ELECTRIC VEHICLES" CONFERENCE RECORD OF THE INDUSTRY APPLICATIONS CONFERENCE, DENVER, OCT. 2 - 5, 1994, vol. 1, no. CONF. 29, 2 octobre 1994 (1994-10-02), pages 435-442, XP000514786 INSTITUTE OF ELECTRICAL AND ELECTRONICS ENGINEERS

## Description

La présente invention est relative à l'alimentation en énergie électrique de véhicules de transport en commun à traction électrique et se rapporte plus particulièrement à l'alimentation en énergie électrique de tramways.

Compte tenu de l'accroissement de la circulation urbaine, il devient nécessaire de pouvoir faire circuler des véhicules de transport en commun tels que des tramways de grande capacité pouvant atteindre 30 à 40 m de longueur et ceci sans faire appel à une alimentation par caténaire, en particulier dans les centres des villes très encombrés d'équipements de toutes sortes, tout en leur assurant des performances et des vitesses commerciales compatibles avec les besoins des systèmes de transport.

On ne connaît pas à ce jour de solution au problème de l'autonomie vis à vis de la caténaire de tramways de grands gabarits.

Les solutions tendant à permettre la circulation autonome, sans caténaire, de véhicules électriques, ne concernent que les petits véhicules de faible capacité et de masse, de l'ordre de 30 tonnes.

Il existe des systèmes de captation continue de l'énergie électrique par le sol mais ces systèmes posent des problèmes difficiles et coûteux de sécurité et de génie civil.

L'invention vise à remédier aux inconvénients des dispositifs de la technique antérieure en créant un système d'alimentation en énergie électrique d'un tramway autonome de grande capacité qui allie la simplicité de conception à un prix de revient raisonnable et à une relative facilité d'installation.

On connaît par le document DE-2405198 un système d'alimentation selon le préambule de la revendication 1. Ce système comporte toutefois des inconvénients qui sont énoncés dans ce document.

La présente invention vise à pallier ces inconvénients.

A cet effet, elle a pour objet un système d'alimentation selon la revendication 1.

L'invention sera mieux comprise à l'aide de la description qui va suivre, donnée uniquement à titre d'exemple et faite en se référant aux dessins annexés, sur lesquels :
- la Fig.1 est un schéma électrique du circuit de puissance du dispositif d'alimentation en énergie électrique d'un tramway suivant l'invention;
- la Fig.2 est une vue schématique d'un arrêt de tramway, comportant des moyens d'alimentation en énergie électrique des moyens rechargeables disposés à bord du véhicule;
- la Fig.3 est une vue schématique du système de gestion de l'énergie d'alimentation du tramway; et
- la Fig.4 est un graphique représentant la gestion de la puissance consommée sur le volant d'inertie du système à récupération cinétique d'énergie

Afin de résoudre le problème de l'alimentation en énergie électrique d'un véhicule qui doit parcourir un itinéraire en majeure partie en mode autonome, la Demanderesse a envisagé les solutions suivantes :
- recharge rapide au cours des arrêts du véhicule dans les stations, d'un systèmes d'accumulation d'énergie cinétique;
- récupération de l'énergie de freinage du véhicule,
- réutilisation optimale en mode autonomie des constituants de base du tramway tels que pantographes, équipements de traction, moteurs, etc..,
- gestion électronique de l'énergie à bord du véhicule avec contrôle actif de la consommation en mode de secours sur batterie,
- circulation en mode conventionnel par captage d'énergie sur caténaire, à l'extérieur de la zone urbaine.

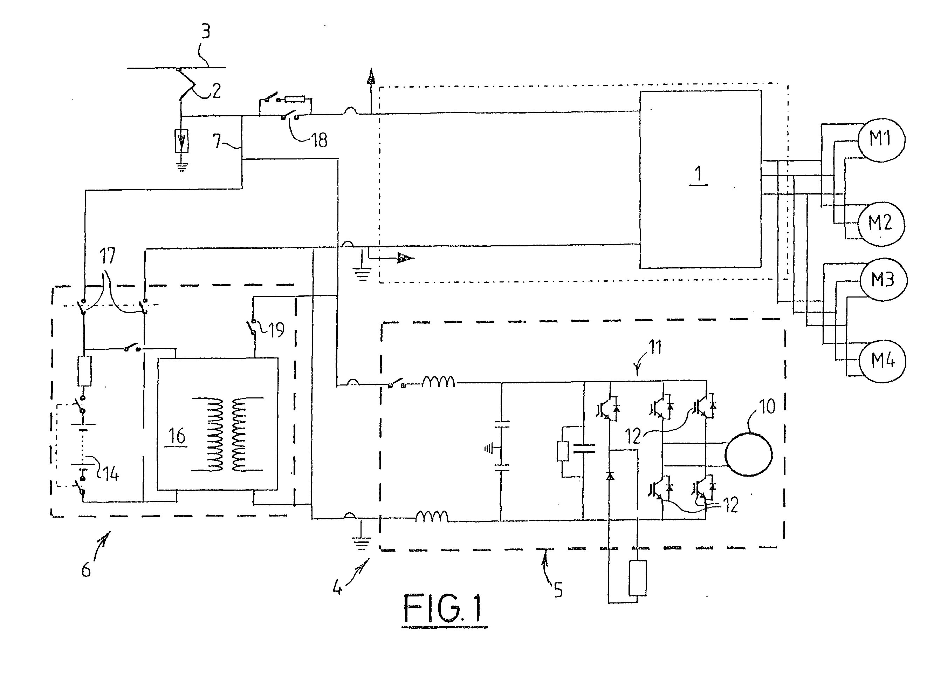

Sur la figure 1, on a représenté le schéma du circuit de puissance d'un tramway autonome combinant un certain nombre des solutions énoncées plus haut.

Ce circuit comporte un système de traction 1 alimentant des moteurs M1,M2,M3,M4 d'entraînement des roues du véhicule.

Le système de traction 1 est alimenté d'une part en régime conventionnel par un pantographe 2 à partir d'une caténaire 3 et d'autre part, en régime autonome par un dispositif d'alimentation autonome embarqué à bord du véhicule et désigné par la référence numérique générale 4.

Le dispositif embarqué 4 comporte un système 5 à accumulation cinétique d'énergie et un système 6 d'autonomie de secours tous deux connectés à un point commun 7 avec le pantographe 2 de transmission de l'énergie d'alimentation à partir de la caténaire 3.

Le système 5 à accumulation cinétique d'énergie comporte un moteur synchrone 10 polyphasé à aimants permanents dont le rotor est de façon en soi connue, disposé à l'extérieur et fait office de masse d'inertie.

Ce moteur est associé à un dispositif électronique d'alimentation 11 à fréquence variable qui permet de réguler une tension fixe en fonction de la vitesse du moteur 10. L'alimentation d'une phase du moteur 10 à l'aide d'un pont de transistors IGBT 12, est représentée sur la figure 1.

En régime de recharge, la masse du rotor du moteur 10 est entraînée à une vitesse élevée.

En régime de décharge, le moteur fonctionne en génératrice et fournit de l'énergie au système de traction 1.

La tension d'alimentation du système à accumulation cinétique d'énergie sur le réseau haute tension est fixée à une valeur comprise entre 700 V et 800 V, ce qui permet un fonctionnement du système de traction 1 identique, que celui-ci soit alimenté par la caténaire (tension typique de 750V) ou par le système à accumulation cinétique d'énergie 5.

Ceci permet notamment :
- de garantir de bonnes performances aux véhicules en mode d'autonomie:
- de commuter aisément entre alimentation par caténaire et alimentation par le système à accumulation cinétique d'énergie 5 sans faire appel à un système électronique de conversion de tension ni à un organe électromagnétique de connexion;
- une grande capacité de recharge du système à accumulation cinétique d'énergie 5 à partir de l'énergie de freinage récupérée du système de traction 1.

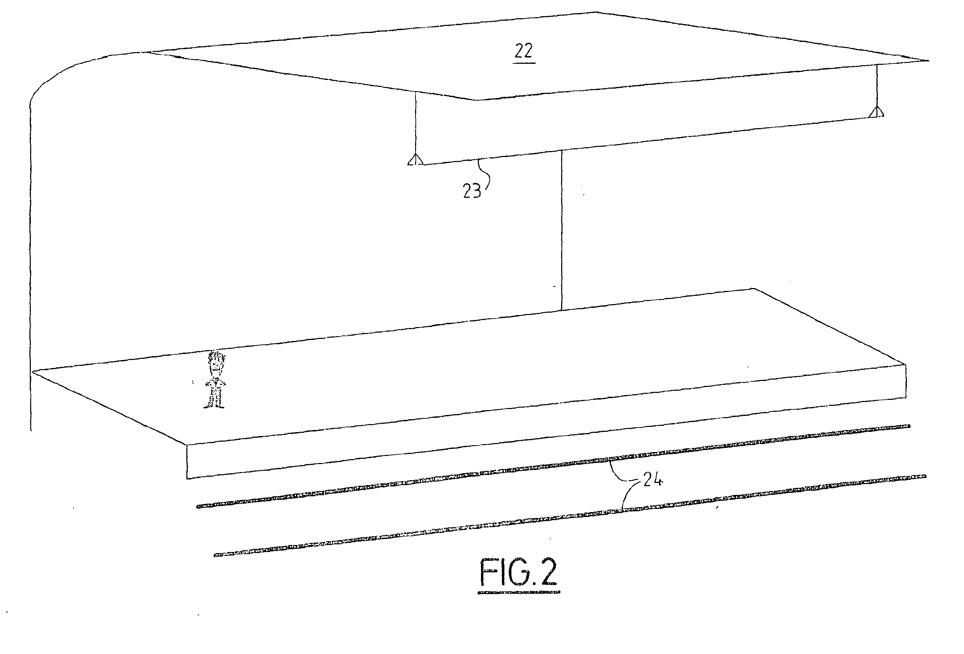

Le système d'autonomie de secours 6 comporte une batterie de traction 14 à laquelle est associé un chargeur 16 connecté au pantographe 2 afin de le relier soit à la caténaire 3, soit à un circuit d'alimentation extérieur qui sera décrit en référence à la figure 2.

Le système d'autonomie de secours 6 peut être connecté par des interrupteurs 17 en combinaison avec un interrupteur 18, au système de traction 1.

II peut également être connecté par l'intermédiaire d'un interrupteur 19 au secteur d'alimentation 3 pour assurer la charge de la batterie de traction 14.

Une connexion 20 permet l'alimentation du système de traction 1 par le système 5 à accumulation cinétique d'énergie.

Sur la figure 2, on a représenté schématiquement une station d'arrêt pour un tramway équipé du système d'alimentation de l'invention. Cette station comporte un auvent 22 qui porte un fil de contact 23 situé au-dessus de la voie 24 et alimenté par le secteur à haute tension, ce fil étant destiné à coopérer avec le pantographe 2 du tramway pour assurer la recharge du système à accumulation cinétique d'énergie 5 et du système d'autonomie de secours 6 pendant l'arrêt du tramway dans la station.

L'originalité de cette architecture réside notamment dans le fait qu'en mode autonomie, le système à accumulation cinétique d'énergie 5 fournit à lui seul l'énergie aux équipements auxiliaires du tramway et au système de traction 1. II n'y a pas de complément d'énergie thermique, électrochimique ou électrique en parallèle sur le système à accumulation cinétique d'énergie. Mais ceci n'est réalisable avec un niveau de performance et de fiabilité suffisant que si les dispositions suivantes sont prévues :
- Une recharge du système à accumulation d'énergie 5 dans les stations. Le principe de recharge est décrit ci-après par des dispositions simples de captage et de génie civil dans les stations.
- Une gestion en temps réel de l'énergie disponible comme décrit ci-après. Cette gestion permet d'optimiser les performances du mode autonomie par rapport au profil de consommation imposé par la ligne et par la conduite. Par ailleurs, le système d'autonomie de secours 6 permet, dans les cas ultimes de décharge du système à accumulation cinétique d'énergie 5, la circulation du véhicule en mode dégradé à vitesse réduite (typiquement 25 km/h) jusqu'à la prochaine station ou une zone sous caténaire.

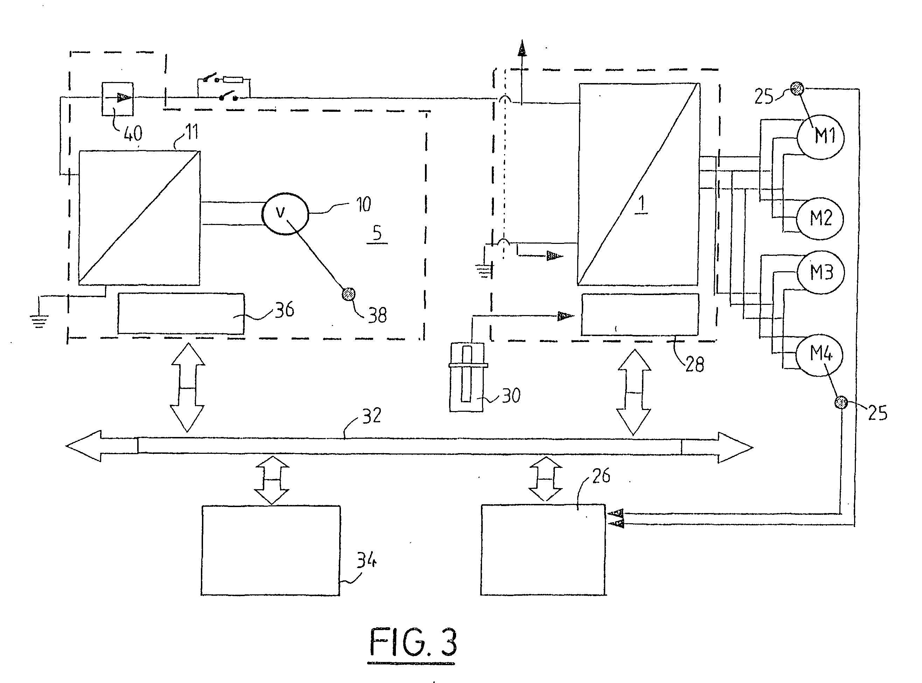

Le séquencement du fonctionnement est le suivant : On va donner à titre d'exemple le passage du véhicule d'une zone sous caténaire à une zone en autonomie.
1) Sur commande du conducteur lors de l'arrêt en station (Fig.2), le pantographe 2 est descendu par un dispositif conventionnel de commande (non représenté), les équipements auxiliaires passent en puissance réduite et sont alimentés par le système à accumulation cinétique d'énergie 5 qui commute en générateur d'énergie.
2) Sur demande du système de traction 1, le système à accumulation cinétique d'énergie 5 fournit alors la puissance nécessaire, ce qui permet le démarrage et la montée en vitesse du véhicule; en freinage, le système de traction 1 envoie de l'énergie au système à accumulation cinétique d'énergie 5.
3) En cas de nécessité de reprises de traction, d'arrêts intempestifs imposés par la conduite ou par la ligne, la consommation sur le système à accumulation cinétique d'énergie 5 augmente sensiblement; une gestion de l'énergie qui sera décrite en référence à la Fig.3, permet alors de limiter cette consommation en optimisant les performances de traction du véhicule tout en lui garantissant une énergie suffisante pour atteindre une prochaine station.
4) A la prochaine station, le pantographe 2 est actionné dans le sens de la montée et le captage d'énergie est effectif en un temps minimal, ce qui permet la recharge du système à accumulation cinétique d'énergie 5 et l'alimentation à puissance maximale des auxiliaire du véhicule par le fil de contact 23 (Fig.2).

Les niveaux de tensions délivrés par le système à accumulation cinétique d'énergie 5, la caténaire 3 et le fil de contact 23, sont compatibles, ce qui permet des commutations aisées de ces sources vis à vis des charges utilisatrices.

Les performances du système suivant l'invention en mode autonomie sont les suivantes.

Sur un parcours type de 500 m entre deux stations, pour une vitesse maximale comprise entre 50 et 60 km/h, les calculs montrent qu'il est possible, par le freinage de récupérer de l'ordre de 30 à 40% de l'énergie consommée en traction. Le complément d'énergie est alors aisément récupérable par les performances de recharge du système à accumulation cinétique d'énergie 5 lors d'un arrêt en station d'une durée typique de 15 à 20 s suivant le niveau de décharge.

Ces performances permettent la suppression de la caténaire sur les nouvelles lignes de tramway, en particulier en centre ville où la vitesse est généralement limitée à 50 km/h; la caténaire ne devient nécessaire que pour des profils particuliers de ligne avec des pentes importantes, ou sur des zones extra-urbaines avec des longueurs importantes entre stations ou nécessitant des vitesses maximales élevées.

Le captage d'énergie en station est assuré comme suit.

Le principe de captage en station est identique à celui sous caténaire. On réutilise le pantographe 2 et le captage s'effectue par le fil 23 situé à hauteur minimale (typiquement 3,60m à 4m) sous l'auvent 22 de la station.

Ce fil peut être souple ou rigide et intégré dans l'architecture et l'urbanisme des stations comme représenté à la figure 2.

Cette solution ne pose pas de problème de sécurité spécifique puisqu'elle est identique à la captation par caténaire.

Afin de minimiser le temps de montée du pantographe 2 lors de l'arrivée en station, il est envisageable d'utiliser les balises d'aide à l'exploitation disposées à l'entrée de chaque station, et dont la détection par le véhicule commanderait l'ordre de montée du pantographe 2.

La descente du pantographe est commandée par l'ordre de départ du conducteur, le démarrage du véhicule est temporisé et n'est effectif que sur retour d'information du pantographe 2 en position basse.

Le temps de montée et de descente du pantographe à cette hauteur de captage est de l'ordre de 1 s.

Ainsi qu'on l'a indiqué plus haut, le bon fonctionnement du système suivant l'invention est conditionné par une gestion rigoureuse de l'énergie disponible.

La figure 3 représente de façon schématique, les moyens de gestion mis en oeuvre dans le système d'alimentation suivant l'invention.

Ces moyens de gestion comprennent des capteurs 25 de la vitesse de rotation de deux des moteurs de traction M1 à M4, connectés à une centrale de tachymétrie 26.

Par ailleurs, au système de traction est associée un circuit électronique de commande 28 qui est relié d'une part à un manipulateur de conduite 30 et d'autre part, à un réseau informatique de bord 32 dont il reçoit des consignes de vitesse.

Le réseau informatique de bord 32 est relié à un ordinateur central de bord 34 et à la centrale tachymétrique 26.

Il est par ailleurs en liaison avec un circuit électronique de commande 36 associé au système à accumulation cinétique d'énergie 5 dont la machine tournante 10 est reliée à un capteur 38 de vitesse du volant d'inertie.

Un capteur de courant 40 est connecté dans la ligne reliant le système à accumulation cinétique d'énergie 5 au système de traction 1.

La gestion de l'énergie du système suivant l'invention est assurée de la façon suivante.

Le système à accumulation cinétique d'énergie 5 délivre ou consomme une puissance P proportionnelle à sa vitesse de rotation Ω, P = k1Ω.

L'énergie totale E emmagasinée dans le système à accumulation cinétique d'énergie 5 est proportionnelle à un moment d'inertie, soit E = k2Ω².

En tout point de vitesse Ω, le contrôle de l'énergie du système à accumulation cinétique d'énergie s'effectue donc dans un plan (puissance, énergie), avec pour chaque variation de vitesse ΔΩ, une variation de puissance ΔP= k1 ΔΩ et une variation d'énergie ΔE = k2ΔΩ².

On remarquera que la représentation de l'énergie consommée en fonction de la puissance instantanée s'effectue selon une parabole passant par le point de puissance maximale Pm pour une énergie maximale Em et pour la vitesse maximale de rotation Ωm du système à accumulation cinétique d'énergie.

Pour des facilités de mesure, ainsi qu'une meilleure précision, la mesure d'énergie est réalisée à partir de la mesure du courant I consommé ou récupéré par le système à accumulation cinétique d'énergie (selon son signe), car le système à accumulation cinétique d'énergie régule une tension constante dans une très large plage de rotation, ce qui signifie que le courant I est proportionnel à la puissance P.

Cette mesure est réalisée par le circuit électronique de commande 36 du système à accumulation cinétique d'énergie associé au capteur de courant 40 et qui calcule par intégration sur un pas d'échantillonnage, l'énergie consommée et l'énergie restante, en tenant également compte dans ce calcul les valeurs de rendements correspondantes.

Le repérage du véhicule sur le parcours est assuré comme suit.

Le tramway possède de façon classique, un équipement de mesure de vitesse (centrale tachymétrique 26), qui reçoit les mesures de vitesse de deux des moteurs de traction M1 et M4 et en tire une valeur de vitesse de référence du véhicule, ainsi qu'une valeur de distance parcourue à partir d'un instant donné (fonction odomètre); ceci permet à l'ordinateur central 34 du véhicule de connaître sa position réelle sur le parcours (interstation et position dans l'interstation).

Il est également possible de recaler la position du véhicule via des balises radio (non représentées), situées à différents points du parcours; ces dispositions sont optionnelles mais existent généralement de manière classique sur les lignes modernes pour l'aide à l'exploitation.

La consommation énergétique dans les conditions nominales de conduite et d'exploitation du tramway sur chaque interstation est mesurée en phase d'essais préliminaires sur la ligne pour différentes vitesses maximales et est mémorisée dans l'ordinateur central 34 de chaque véhicule.

Pour chaque interstation et en tout point donné par un pas de distance pk de l'ordre de la longueur du véhicule (30 à 40 m), l'ordinateur central de bord 34 connaît donc les consommations énergétiques nominales à fournir E (v,pk) pour différentes vitesses maximales v, jusqu'au prochain arrêt en station.

Lorsque l'ordinateur central 34 détecte en traction et sur au moins deux pas de distance, une surconsommation sur le système à accumulation cinétique d'énergie (seuil réglable de l'ordre de 20% de surconsommation par exemple), il recherche en mémoire dans sa table de consommation la valeur de vitesse v = Vr pour laquelle l'énergie restant à fournir jusqu'au prochain arrêt dans une station (en intégrant le freinage), est immédiatement inférieure à un seuil limite calculé pour pouvoir recharger le volant pendant le temps d'arrêt prévu pour cette station.

Cette valeur de vitesse Vr est alors émise par l'ordinateur de bord 34 à destination du système de traction 1 qui applique cette consigne de limitation de vitesse lorsque le manipulateur de conduite 30 est en position traction; un signalement de réduction de vitesse est également émis en cabine pour le conducteur.

En freinage, cette réduction est inhibée afin de rendre maximale la récupération d'énergie.

Lorsque la réduction de vitesse est trop importante ou que le capteur de vitesse 38 du système à accumulation cinétique d'énergie détecte un seuil vitesse minimal du volant d'inertie du moteur 10, !e système à accumulation cinétique d'énergie régule alors une tension de sortie plus faible, afin d'adapter cette tension à la tension du système d'autonomie de secours 6 jusque là en sauvegarde; une commutation automatique est alors réalisée sur ce système de secours 6 par le circuit électronique de commande 36 qui ferme les interrupteurs 17(Fig.1).

Le système à batterie 14 permet la circulation du véhicule en mode dégradé à vitesse réduite (typiquement 25 km/h) jusqu'au prochain arrêt en station; ce mode est un mode exceptionnel et la batterie 14 est peu sollicitée en nombre de cycles, donc en durée de vie.

Le système à batterie est rechargé par un chargeur spécifique en dépôt ou à partir de la caténaire 3 lorsque le véhicule circule sur des zones de ligne avec caténaire (Fig.1).

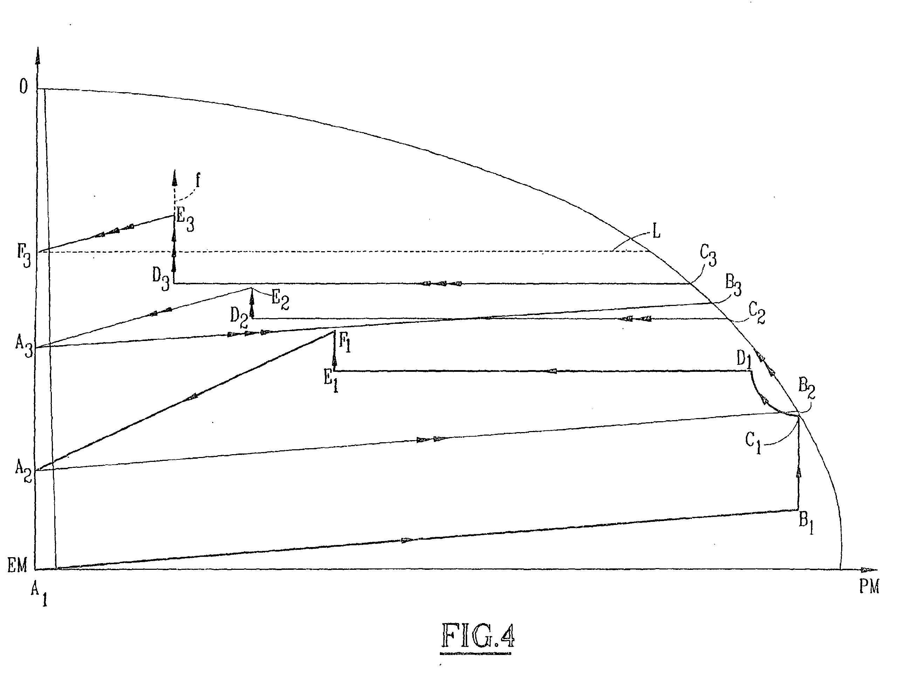

Le principe de contrôle actif d'énergie est représenté schématiquement à la figure 4 à travers l'exemple d'interstation suivant.

Le premier démarrage ainsi que le premier parcours jusqu'à l'arrêt du véhicule est représenté par une boucle désignée par des flèches simples.

La puissance totale consommée est inférieure à la puissance maximale disponible sur le système à accumulation cinétique d'énergie 5.

Au cours de ce premier cycle, la vitesse atteint une valeur maximale au point E₁, puis se maintient à cette valeur au cours du tronçon E₁F₁. Au cours du tronçon F₁A₂ se produit un freinage avec récupération d'énergie.

Le second démarrage et le second parcours jusqu'à l'arrêt suivant du véhicule est représenté par une boucle A₂B₂C₂D₂E₂A₃ désignée par les flèches doubles.

La puissance consommée est régulée par le système de traction à la limite de la caractéristique maximale du système à accumulation cinétique d'énergie 5; au cours de la phase de traction, l'ordinateur central 24 mesure une surconsommation sur le système à accumulation cinétique d'énergie 5 par rapport au profil de consommation mémorisé sur cette interstation; une réduction de vitesse est donc imposée au véhicule.

Au cours du tronçon B₂C₂, la vitesse croît mais ne peut être maintenue à la vitesse maximale de sorte que pendant le tronçon B₂C₂, on procède au contrôle de l'énergie consommée comparée à un gabarit d'énergie par réduction de la consigne de vitesse.

Au cours du tronçon C₂D₂, on atteint un nouveau palier de vitesse. Cette vitesse inférieure à la vitesse au cours du palier E₁F₁ est maintenue au cours du palier D₂E₂.

Puis au cours du tronçon E₂A₃, intervient un freinage avec récupération d'énergie jusqu'à l'arrêt du véhicule.

Le troisième démarrage est supposé inopiné, ce qui induit une surconsommation avec réduction de vitesse maximale.

Le troisième démarrage et le troisième parcours jusqu'à l'arrêt sont représentés par la boucle A₃B₃C₃D₃E₃F₃ désignée par des flèches triples.

Au cours du tronçon A₃B₃, le véhicule passe de l'arrêt à une vitesse maximale compatible avec l'énergie restant disponible dans le système à accumulation cinétique d'énergie 5.

Au cours du tronçon B₃C₃, il y a à nouveau réduction de la vitesse de consigne et au cours du tronçon C₃D₃, la vitesse du véhicule évolue vers un palier qui se maintient au cours du tronçon D₃E₃.

On voit qu'au cours de ce palier, la zone limite de décharge du volant 10 (Fig.1) indiquée par la ligne horizontale en pointillé L, est dépassée.

Cependant, un freinage, au cours du tronçon E₃F₃ assure une récupération d'énergie qui lors de l'arrêt du véhicule au point F₃ ramène l'énergie disponible à la limite de décharge du volant, de sorte que si l'arrêt au point F₃ se trouve à une station disposant de moyens de charge, le volant 10 du moteur peut être relancé de manière à atteindre une énergie suffisante au cours du temps de stationnement du véhicule pour lui permettre de poursuivre normalement son parcours.

Si au contraire, le palier de vitesse se prolonge au-delà du tronçon D₃E₃, comme indiqué en pointillé par la flèche f, il y a commutation sur le système d'autonomie de secours 6 qui permet d'alimenter le système de traction 1 de façon que le tramway puisse rejoindre la prochaine station en régime dégradé avec une vitesse de l'ordre de 25 km/h.

Cette commutation est assurée par le circuit électronique de commande 36 qui commande la fermeture des interrupteurs 17 (Fig.1).

Grâce à l'agencement qui vient d'être décrit, le système d'alimentation pour véhicule à traction électrique permet au véhicule de présenter des performances très bien adaptées aux parcours urbains.

Par ailleurs, le coût d'un tel système est relativement réduit par rapport aux performances obtenues tandis que sa sécurité et sa fiabilité sont remarquables.

## Revendications

1. Système d'alimentation d'un véhicule à traction électrique équipé de moteurs électriques de traction (M1 à M4) alimentés par un système de traction et des moyens à pantographe (2) de connexion du système de traction (1) à un caténaire (3), comportant un dispositif d'alimentation autonome embarqué à bord du véhicule et comprenant un système (5) à accumulation cinétique d'énergie à machine tournante à rotor formant volant d'inertie et fonctionnant soit en moteur, soit en génératrice, des moyens (2,18) de connexion du système (5) à accumulation cinétique d'énergie en régime de charge au secteur d'alimentation pendant les arrêts du véhicule dans des stations, et en régime de décharge, au système de traction (1),
**caractérisé par le fait que**
ledit système (5) à accumulation cinétique d'énergie est un système de récupération de l'énergie de freinage du véhicule, et comporte des moyens (28, 32, 34, 36) de gestion de l'énergie du système à accumulation cinétique d'énergie (5) en vue de permettre au véhicule d'utiliser au mieux l'énergie dudit système pour lui permettre d'effectuer son parcours entre des recharges à partir du secteur à haute tension dans deux stations successives, un capteur (40) du courant débité par le système à accumulation cinétique d'énergie (5) vers le système de traction (1), des moyens tachymétriques (25,26) de détermination de la vitesse de rotation d'au moins deux moteurs électriques (M1,M4) de traction du véhicule et de la distance parcourue par le véhicule et un capteur (38) de la vitesse du volant de la machine tournante (10) du système à accumulation cinétique d'énergie étant associés auxdits moyens de gestion ;
lesdits moyens de gestion comportant un ordinateur central de bord (34) relié par un réseau informatique de bord (32) à un circuit électronique de commande (28) du système de traction (1) et un circuit électronique de commande (36) du système à accumulation cinétique d'énergie (5)
l'ordinateur central de bord (34) du véhicule contenant des valeurs de vitesse correspondant à des énergies restant à fournir jusqu'au prochain arrêt du véhicule dans une station, lesdites valeurs d'énergie étant destinées à être comparées avec l'énergie encore disponible dans le système (5) à accumulation cinétique d'énergie pour délivrer au système de traction (1) des instructions de consigne de limitation de vitesse lorsque le véhicule est dans l'état de traction
et que le dispositif d'alimentation autonome (4) comporte en outre un système d'autonomie de secours (6) pouvant être relié au secteur en vue de sa recharge ou au système de traction (1) en vue de l'alimentation de celui-ci en mode dégradé, et comprenant une batterie de traction (14) et un chargeur (16) de ladite batterie à partir du secteur, et des moyens (17, 19) de commutation du système d'autonomie de secours (6), soit sur le système de traction, soit sur le secteur.

2. Système d'alimentation suivant la revendication 1, **caractérisé en ce qu'**il comporte en outre dans chaque station, un fil de contact (23) d'alimentation du système à accumulation cinétique d'énergie (5) à partir du secteur par l'intermédiaire desdits moyens (2, 18) de connexion du système de traction à la caténaire (3).

3. Système d'alimentation suivant la revendication 2, **caractérisé en ce qu'**il comporte en outre des moyens de commande des moyens de connexion à pantographe (2) en vue de leur mise en contact avec le fil de contact (23) dès l'arrivée du véhicule dans une station et des moyens de commande de retrait des moyens de connexion à pantographe (2) par rapport au fil de contact (23) lorsque le véhicule quitte la station.

4. Système d'alimentation suivant la revendication 1, **caractérisé en ce que** le circuit électronique de commande (36) des moyens (5) à accumulation cinétique d'énergie comporte des moyens d'actionnement des moyens de commutation (17) du système d'autonomie de secours (6) sur le système de traction (1) lorsque l'énergie disponible sur le système (5) à accumulation cinétique d'énergie atteint une valeur minimale prédéterminée au-dessous de laquelle le système à accumulation cinétique d'énergie (5) n'est plus rechargeable en station au cours d'une durée d'arrêt normal.

## Claims

1. supply system for an electric traction vehicle equipped with electric traction motors (M1 to M4) supplied by a traction system and with pantograph means (2) for connection of the traction system (1) to a catenary (3), having an autonomous supply apparatus carried or, board the vehicle and comprising a system (5) for kinetically storing energy having a rotating machine with a rotor forming a flywheel and functioning either as a motor or as a generator, means (2, 18) for connecting the system (5) for kinetically storing energy, in charging mode, to the mains supply whilst the vehicle is stopped at stations and, in discharging mode, to the traction system (1),
**characterised in that**
said system (5) for kinetically storing energy is a system for recevering the braking energy of the vehicle and has means (28, 32, 34, 36) for management of the energy of the system (5) for kinetically storing energy so as to allow the vehicle to make best use of the energy of said system in order to allow it to complete its travel between operations of recharging from the high-voltage mains at two successive stations, wherein a sensor (40) for the current delivered by the system (5) for kinetically storing energy to the traction system (1), tachometer means (25, 26) for determination of the speed of rotation of at least two electric traction motors (M1, M4) of the vehicle and of the distance travelled by the vehicle and a sensor (38) of the speed of the flywheel of the rotating machine (10) of the system for kinetically storing energy are associated with said management means;
said management means having a central on-board computer (34) connected by an on-board information-technology network (32) to an electronic control circuit (28) of the traction system (1) and an electronic control circuit (36) of the system (5) for kinetically storing energy;
the central on-board computer (34) of the vehicle containing speed values which correspond to energies that remain to be provided until the vehicle next stops at a station, said energy values being for comparison with the energy still available in the system (5) for kinetically storing energy in order to supply the traction system (1) with speed limitation setpoint instructions when the vehicle is in the traction state;
and **in that** the autonomous supply apparatus (4) additionally has a back-up autonomy system (6) which can be connected to the mains for the purpose of recharging it or to the traction system (1) for the purpose of supplying the latter in degraded mode and comprising a traction battery (14) and a charger (16) for said battery from the mains, and means (17, 19) for switching the back-up autonomy system (6) either to the traction system or to the mains.

2. Supply system according to claim 1, **characterised in that** it additionally has, in each station, a contact line (23) for supply of the system (5) for kinetically storing energy from the mains by way of said means (2, 18) for connecting the traction system to the catenary (3).

3. Supply system according to claim 2, **characterised in that** it additionally has means for controlling the pantograph connection means (2) for the purpose of placing them in contact with the contact line (23) on arrival of the vehicle at a station and control means for withdrawing the pantograph connection means (2) from the contact line (23) when the vehicle leaves the station.

4. Supply system according to claim 1, **characterised in that** the electronic control circuit (36) of the means (5) for kinetically storing energy has means for actuating the means (17) for switching the back-up autonomy system (6) to the traction system (3) when the energy available in the system (5) for kinetically storing energy reaches a predetermined minimum value bellow which the system (5) for kinetically storing energy is no longer rechargeable at a station within the duration of a normal stop.

## Patentansprüche

1. System zur Versorgung eines elektrischen Zugfahrzeugs, das mit elektrischen Zugmotoren (M1 bis M4) ausgestattet ist, die durch ein Zugsystem versorgt werden, und mit Abnehmern (2) zur Verbindung des Zugsystems (1) mit einer Fahrleitung (3), umfassend eine selbständige Versorgungseinrichtung an Bord des Fahrzeugs und ein System (5) zur Sammlung kinetischer Energie durch eine Drehmaschine mit einem Rotor, der ein Schwungrad bildet und die entweder als Motor oder als Generator wirkt, sowie Mittel (2,18) zur Verbindung des Systems (5) zur Sammlung kinetischer Energie im Ladungsbetrieb mit dem Versorgungsteil während des Halts des Fahrzeugs in einer Station und mit dem Zugsystem (1) im Entladungsbetrieb,
**dadurch gekennzeichnet, dass** das System (5) zur Sammlung kinetischer Energie ein Energierückgewinnungssystem der Bremse des Fahrzeugs ist und Mittel (28,32,34,36) umfasst zur Leitung der Energie des Systems zur Sammlung kinetischer Energie (5) zum Fahrzeugs zur Ermöglichung der Nutzung allenfalls derjenigen Energie des Systems, die es erlaubt, seinen Weg beim Entladen des Hochspannungsbereichs zwischen zwei aufeinanderfolgenden Stationen zurückzulegen, einen Sensor (40) zur Messung des Stroms, der von dem System zur Sammlung kinetischer Energie (5) an das Zugsystem (1) gegeben wird, Gesekwindigkeitsmessmittel (25,26) zur Bestimmung der Rotationsgeschwindigkeit der zumindest zwei Elektromotoren (M1,M4) des Zugfahrzeugs und der vom Fahrzeug zurückgelegten Distanz, und einen Geschwindigkeitssensor (38) des Schwungsrads der Drehmaschine (10) des Systems zur Sammlung kinetischer Energie, welche den Leitungsmitteln zugeordnet sind;
welche Leitungsmittel einen Zentralbordrechner (34) umfassen, der durch ein Bordinformationsnetz (32) mit einem Steuerschaltkreis (28) des Zugsystems (1) und einem Steuerschaltkreis (36) des Systems zur Sammlung kinetischer Energie (5) verbunden ist;
welcher Zentralbordrechner (34) des Fahrzeugs Geschwindigkeitswerte enthält, die Energien entsprechen, die zum Erreichen des nächsten Halts des Fahrzeugs in einer Station verbleiben, welche Energiewerte dazu vorgesehen sind, mit der noch in dem System (5) zur Sammlung kinetischer Energie verfügbaren Energie verglichen zu werden, zum Liefern an das Zugsystem (1) Befehle zur Begrenzung der Geschwindigkeit, wenn das Fahrzeug sich im Zugzustand befindet;
und dass die selbständige Versorgungseinrichtung (4) ferner ein autonomes Hilfssystem (6) umfasst, das mit dem Versorgungsteil zur Wiederaufladung oder mit dem Zugsystem (1) zur Versorgung desselben, in einem schwächerer Modus verbunden werden kann, umfassen eine Zugbatterie (14) und eine Einrichtung (16) zum Laden der Batterie vom Versorgungsteil, und Mittel (17,19) zur Verbindung des autonomen Hufssystems (6) mit dem Zugsystem oder dem Versorgungsteil.

2. Versorgungssystem gemäß Anspruch 1, **dadurch gekennzeichnet, dass** in jeder Station ein Kontaktdraht (23) zur Versorgung des Systems zur Sammlung kinetischer Energie (5) vom Sektor durch Zwischenanordnung der Mittel (2,18) zur Verbindung des Zugsystems mit der Fahrleitung (3) vorhanden ist.

3. Versorgungssystem gemäß Anspruch 2, **gekennzeichnet** ferner durch Mittel zur Steuerung der Mittel zur Verbindung des Abnehmers (2) mit dem Kontaktdraht (23) bei Ankunft des Fahrzeugs in einer Station, und durch Mittel zur Steuerung des Rückzugs der Mittel der Verbindung mit dem Abnehmer (2) vom Kontaktdraht (23), wenn das Fahrzeug die Station verlässt.

4. Versorgungssystem gemäß Anspruch 1, **dadurch gekennzeichnet, dass** der elektronische Steuerschartkreis (36) der Mittel (5) zur Sammlung kinetischer Energie Mittel umfasst zur Wirkung der Mittel zur Verbindung (17) des autonomen Hilfssystems (6) auf das Zugsystem (1), wenn die im System (5) zur Sammlung kinetischer Energie zur Verfügung stehende Energie einen vorbestimmten Minimalwert erreicht, unter welchem das System zur Sammlung kinetischer Energie (5) nicht in der Station während eines normalen Aufenthalts wiederaufladbar ist.
